# EUROPEAN PATENT SPECIFICATION

(11) **EP 4 042 854 B1**
(45) Date of publication and mention of the grant of the patent: **17.12.2025**
(21) Application number: 22382115.8
(22) Date of filing: 14.02.2022
(51) Int. Cl.: A01C 23/04

(54) **A DEVICE FOR APPLYING A FERTILZER IN FORM OF A SOLID BODY**
VORRICHTUNG ZUM AUSBRINGEN EINES DÜNGEMITTELS IN FORM EINES FESTKÖRPERS
DISPOSITIF D'APPLICATION D'ENGRAIS SOUS FORME DE CORPS SOLIDE

(30) Priority: 12.02.2021 ES 202130281 U
(43) Date of publication of application: 17.08.2022
(73) Proprietor: Company Hernandez, Jose Vicente, 46470 Masanasa (Valencia) (ES)
(72) Inventor: Company Hernandez, Jose Vicente, 46470 Masanasa (Valencia) (ES)
(74) Representative: Herrero & Asociados, S.L.

(56) References cited:
- US-A- 2 218 790
- US-A- 4 477 960

## Description

### Field of the invention

The present invention belongs to the field of plant fertilisation elements and concerns a fertiliser dosing device for their application, preferably in gardens and floral environments both at a private and professional level, as well as the dosed fertiliser.

### Background to the invention

Nowadays, fertiliser or plant and flower fertiliser in general is supplied in liquid, bulk, solid or powder form.

An example of a liquid fertiliser irrigation system is described in the Spanish patent with publication number ES373832 which describes a sprinkler irrigation system where a sprinkler is incorporated into the lid of a tank containing liquid fertilisers or insecticides, which are absorbed by the irrigation water.

An example of a solid fertiliser is described in patent ES2036123, which describes the manufacture of solid inorganic fertilisers to which water-retaining polymers such as cellulosic derivatives, polyacrylic derivatives and polyacrylamide and its derivatives are added, giving the product a water-absorbing capacity.

Normally, solid fertilisers are distributed among plants and flowers in a random way and usually with manual contact, and their prolonged use over time is also harmful and inadvisable, since contact with these products can cause skin irritation, unless they necessarily have means of protection such as gloves or special packaging systems which are more costly; otherwise, current fertiliser and fertiliser systems have a high rate of contact between the product and the user of the product.

It is therefore obvious that these habits are not the most advisable.

The document US4477960 contemplates the provision of water-soluble nutriment suspended in concentrated form within a hydrophilic gel carrier in a complex fertilizer cartridge.

The document US2218790 describes sprayers adapted for connection with an ordinary garden hose or the like.

It is therefore desirable to develop fertiliser devices for plant and flower systems which, in a simple, clean and safe way, avoid the above-mentioned drawbacks and also reduce the current fertiliser containers used in the household.

### Description of the invention

The present invention solves the problems existing in the state of the art by means of a device that makes contact with the fertiliser unnecessary in order to apply it to the desired area, as this fertiliser will be previously dissolved in the flow of water that is going to irrigate the area to be fertilised and will be applied together with the water by means of the usual irrigation elements such as the irrigation hose or hosepipe.

Therefore, the present invention is defined by appended claim 1.

It should be noted that the adapter with a watertight washer and a retaining filter inside is the one which, when in use, will be attached to the hose, so that the filter prevents the hose from becoming clogged as the fertiliser in the form of a solid body dilutes and reduces in size. The filter can also prevent excess fertiliser from reaching the hose itself.

The fertiliser for irrigation device as defined above which is embodied in an elongated solid body with at least one through hole in its interior.

This configuration facilitates its dissolution when in contact with a flow of water and therefore it is suitable to be diluted or soluble in contact with a flow of liquid e.g. water.

### Brief description of the drawings

For a better understanding of what has been explained above, some drawings are included in which, schematically and only by way of a non-limiting example, a practical case of realisation is represented.

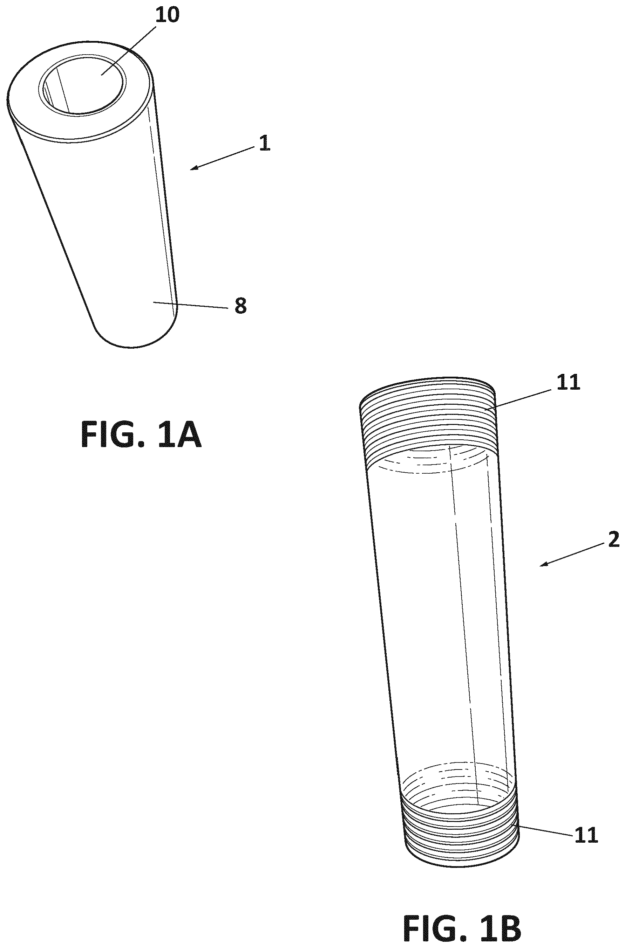

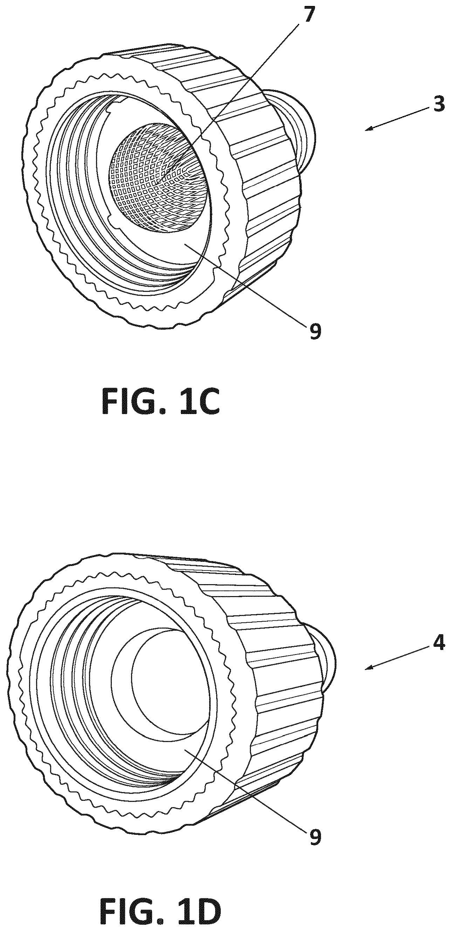

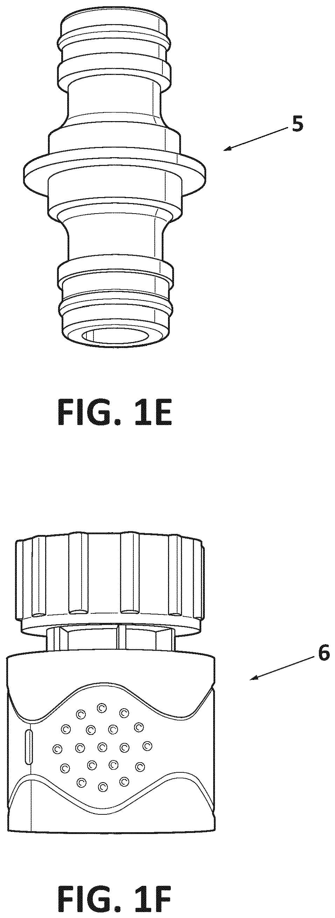

Figure 1A shows the fertiliser. Figure 1B shows the container tube. Figures 1C and 1D show the adapters. Figure 1E shows the quick coupling piece and figure 1F shows the connector.

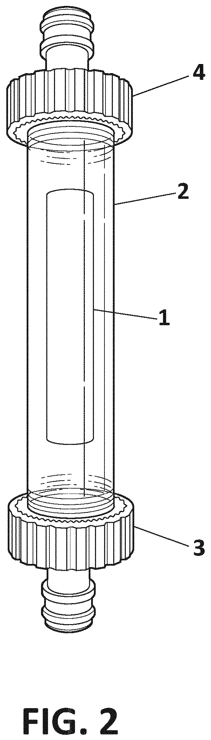

Figure 2 shows an image of a materialisation of the system.

### Description of a preferred embodiment

As stated above the present invention is defined by claim 1.

Additionally it may comprise at least:
- One quick coupling piece (5) for exchange to normal irrigation.
- A connector (6) to a mains or hydrant adaptor (4).

These elements make the system more versatile and allow it to be adapted to different irrigation situations.

The parts comprising the device can be supplied to the user as a whole in blister/bag or box format.

When irrigation is to be carried out with the device of the invention, the fertiliser is introduced into the tube (2) in the form of a solid body (1), tube (2) which preferably has corresponding threads (11) on both ends, suitable for closing the ends of the tube (2) in collaboration with the adapters (3 and 4) of the net or hydrant and of the hose or hosepipe.

Thus, the solid body (1) is placed inside a tube (2) preferably made of polyester and transparent so that it is possible to observe the state and degree of dilution or dissolution of the body (1) during the use of the device during fertilisation.

This device, coupled to a hydrant on one side and to the corresponding hose on the other, allows the flow of water to flow through the inside of the tube (2) once irrigation is activated, dissolving the solid body (1).

In this way, the dilution process is carried out during irrigation without the need for the user to come into contact with the product and, in addition, it is easily possible to exchange the described fertiliser irrigation device for a conventional irrigation system by simply disconnecting the fertiliser device and fitting a quick coupling (5) to connect the hose to the hydrant or the other way round, as required.

The body (1) can then be ready to be fertilised again one after the other, while the body (1) remains completely isolated inside the container tube (2) and awaits further use.

Once the body (1) is completely dissolved, the device is easily disassembled, allowing the insertion of a new replacement body (1) according to the user's needs. Preferably the fertiliser for hazard systems such as the device already described is embodied in an elongated solid body (1) with at least one through hole (10) inside it. Preferably the solid body (1) is a tubular solid body (1) with the through hole (10) arranged longitudinally to said solid body (1).

As the body (1) is hollow and its dimensions (both external diameter and length) are smaller than the corresponding dimensions of the tube (2), it is able to move both longitudinally and rotationally inside the tube (2), creating turbulence as the liquid flows through it and along its external area, so that it is gradually diluted.

Therefore the fertiliser is materialised in a solid body (1) having an outer diameter and length dimension, smaller than the dimensions of the tube (2) of the device defined in the present invention.

Preferably the fertiliser in its composition comprises a polyol. The term polyol means a molecule of formula CHOH-₂(CHOH)ₙ-CHOH₂, where n preferably is a number between 1 and 12.

Preferably the fertiliser is coated with a protective layer (8). More preferably the protective layer (8) is made of polyethylene.

The protective layer (8) is easily removable and protects the body (1) from moisture during storage and prevents direct contact with the user during handling. This makes it easy and clean to use without contact problems.

The body (1) can be supplied in a pouch, box or blister pack in variable numbers as refills for the device described above.

According to the invention, the dimensions of both the tube (2) and the body (1) are as follows:
Tube (2):
   Outer diameter. - 20/30 mm.
   Inner diameter. - 18/28 mm.
   Length. - 60/120 mm.
Body (1):
   Outer diameter. - 16/17.5 mm.
   Inner diameter. - 1/15,5 mm.
   Length. - 40/100 mm.

### Preferably:

Tube (2):
   Outer diameter. - 25 mm.
   Inner diameter. - 21 mm.
   Length. - 90 mm.
Body (1):
   Outer diameter. - 16 mm.
   Inner diameter. - 9 mm.
   Length. - 50 mm.

This system guarantees the irrigation and fertilisation of plants and vegetables in a perfectly diluted way and with an effect on the plant that takes advantage of the fertilising effect, being clean, ecological, practical, safe, economical, controlled and adaptable.

Finally, it should be noted that the device has been tested on fruit and vegetable crops and the results are as follows:

**Table 1: Comparison of treatments**

| Fertiliser treatment | Fresh weight leaves (g) | Dry matter leaves (%) |
|---|---|---|
| Commercial fertiliser | 609,58±57,51 | 5,45±0,37 |
| Compound developed | 603,44±31,47 | 5,27±0,28 |

As can be seen, the results with the developed fertiliser applied with the device of the invention are not only optimal, but also in the present invention it is not necessary to touch the fertiliser and the way of applying it is more practical, safe and economical.

## Claims

1. A device for applying a fertiliser in the form of a solid body (1) comprising the following elements:
a fertiliser container tube (2);
an adaptor (3) to an irrigation hose, comprising a sealing washer (9) and a filter retainer (7) inside;
a mains or hydrant adaptor (4), comprising a watertight washer (9) inside wherein the fertilizer consists of an elongated tubular, solid body (1) with at least one through hole (10) inside arranged longitudinally to the solid body, and its dimensions, being both an external diameter and a length, are smaller than the corresponding dimensions of the tube (2) and the fertilizer is able to move both longitudinally and rotationally inside the tube (2) wherein the tube (2) comprises an outer diameter in a range from 20mm to 30 mm; an inner diameter from 18mm to 28 mm and a length from 60 mm to 120 mm and the body (1) comprises an outer diameter from 16 mm to 17.5 mm, an inner diameter from 1mm to 15,5 mm and a length from 40mm to 100 mm.

2. Device according to claim 1, **characterized in that** the tube (2) comprises externally corresponding threads (11) at both ends, suitable for closing the ends of the tube (2) in collaboration with the adapters (3 and 4).

3. Device according to any one of claims 1 to 2, **characterized in that** the tube (2) is made of polyester.

4. Device according to any one of claims 1 to 3, **characterized in that** the composition of the fertilizer comprises a polyol.

5. Device according to any one of claims 1 to 4, **characterized in that** the fertilizer is coated with a protective layer (8).

6. Device according to claim 5, **characterized in that** the protective layer (8) is made of polyethylene.

7. System comprises the device according to any one of claims 1 to 6, **characterised in that** also comprises:
a quick coupling piece (5) for exchange to normal irrigation;
a connector (6) to a mains or hydrant adaptor (4).

## Patentansprüche

1. Vorrichtung zum Ausbringen eines Düngemittels in Form eines Festkörpers (1), umfassend die folgenden Elemente:
ein Düngemittelbehälterrohr (2);
einen Adapter (3) für einen Bewässerungsschlauch, umfassend eine Dichtungsscheibe (9) und einen Filterhalter (7) im Inneren;
einen Netz- oder Hydrantenadapter (4), umfassend eine wasserdichte Scheibe (9) im Inneren, wobei
das Düngemittel aus einem länglichen, rohrförmigen Festkörper (1) mit mindestens einem durchgehenden Loch (10) im Inneren besteht, das in Längsrichtung zum Festkörper angeordnet ist, und seine Abmessungen, sowohl ein Außendurchmesser als auch eine Länge, kleiner sind als die entsprechenden Abmessungen des Rohrs (2), und das Düngemittel in der Lage ist, sich sowohl in Längsrichtung als auch in Drehrichtung innerhalb des Rohrs (2) zu bewegen, wobei
das Rohr (2) einen Außendurchmesser in einem Bereich von 20 mm bis 30 mm, einen Innendurchmesser von 18 mm bis 28 mm und eine Länge von 60 mm bis 120 mm aufweist, und der Körper (1) einen Außendurchmesser von 16 mm bis 17,5 mm, einen Innendurchmesser von 1 mm bis 15,5 mm und eine Länge von 40 mm bis 100 mm aufweist.

2. Vorrichtung nach Anspruch 1, **dadurch gekennzeichnet, dass**
das Rohr (2) an beiden Enden außen entsprechende Gewinde (11) aufweist, die geeignet sind, die Enden des Rohrs (2) in Zusammenwirkung mit den Adaptern (3 und 4) zu verschließen.

3. Vorrichtung nach einem der Ansprüche 1 bis 2, **dadurch gekennzeichnet, dass**
das Rohr (2) aus Polyester gefertigt ist.

4. Düngemittel nach einem der Ansprüche 1 bis 3, **dadurch gekennzeichnet, dass**
die Zusammensetzung des Düngemittels ein Polyol umfasst.

5. Düngemittel nach einem der Ansprüche 1 bis 4, **dadurch gekennzeichnet, dass**
der Festkörper mit einer Schutzschicht (8) beschichtet ist.

6. Düngemittel nach Anspruch 5, **dadurch gekennzeichnet, dass**
die Schutzschicht (8) aus Polyethylen gefertigt ist.

7. System, umfassend die Vorrichtung nach einem der Ansprüche 1 bis 6, **dadurch gekennzeichnet, dass** es ferner umfasst:
ein Schnellkupplungsstück (5) für den Wechsel zur normalen Bewässerung;
ein Verbindungsstück (6) für einen Netz- oder Hydrantenadapter (4).

## Revendications

1. Dispositif pour appliquer un engrais sous forme d'un corps solide (1) comprenant les éléments suivants :
un tube conteneur d'engrais (2) ;
un adaptateur (3) pour tuyau d'irrigation, comprenant une rondelle d'étanchéité (9) et un dispositif de retenue de filtre (7) à l'intérieur ;
un adaptateur pour réseau d'alimentation en eau ou bouche d'incendie (4), comprenant une rondelle d'étanchéité (9) à l'intérieur, dans lequel l'engrais se présente sous la forme d'un corps solide allongé, tubulaire (1) avec au moins un trou traversant (10) à l'intérieur disposé longitudinalement par rapport au corps solide, et ses dimensions, à la fois un diamètre extérieur et une longueur, sont plus petites que les dimensions correspondantes du tube (2) et l'engrais peut se déplacer à la fois longitudinalement et en rotation à l'intérieur du tube (2), dans lequel le tube (2) comprend un diamètre extérieur compris entre 20 mm et 30 mm ; un diamètre intérieur compris entre 18 mm et 28 mm et une longueur comprise entre 60 mm et 120 mm et le corps (1) comprend un diamètre extérieur compris entre 16 mm et 17,5 mm, un diamètre intérieur compris entre 1 mm et 15,5 mm et une longueur comprise entre 40 mm et 100 mm.

2. Dispositif selon la revendication 1, **caractérisé en ce que** le tube (2) comprend des filetages correspondants (11) extérieurs aux deux extrémités, adaptés pour fermer les extrémités du tube (2) en collaboration avec les adaptateurs (3 et 4).

3. Dispositif selon l'une quelconque des revendications 1 à 2, **caractérisé en ce que** le tube (2) est en polyester.

4. Dispositif selon l'une quelconque des revendications 1 à 3, **caractérisé en ce que** la composition de l'engrais comprend un polyol.

5. Dispositif selon l'une quelconque des revendications 1 à 4, **caractérisé en ce que** l'engrais est recouvert d'une couche protectrice (8).

6. Dispositif selon la revendication 5, **caractérisé en ce que** la couche protectrice (8) est en polyéthylène.

7. Système comprenant le dispositif selon l'une quelconque des revendications 1 à 6, **caractérisé en ce qu'**il comprend également :
une pièce de raccordement rapide (5) pour passer à une irrigation normale ;
un connecteur (6) à un adaptateur pour réseau d'alimentation en eau ou bouche d'incendie (4).
